# EUROPEAN PATENT APPLICATION

(11) **EP 4 057 661 A1**
(43) Date of publication of application: **14.09.2022**
(21) Application number: 22160336.8
(22) Date of filing: 04.03.2022
(51) Int. Cl.: H04W 12/30, H04W 12/45, H04W 12/03, H04L 9/40

(54) **SYSTEM, MODULE, CIRCUITRY AND METHOD**

(30) Priority: 09.03.2021 EP 21305286; 19.03.2021 GB 202103821
(71) Applicant: Kigen (UK) Limited, Cambridgeshire CB4 0DP (GB)
(72) Inventor: GHAROUT, Said, Cambridge, CB4 0DP (GB); HUNTER, William David, Cambridge, CB4 0DP (GB)
(74) Representative: D Young & Co LLP

(57) **Abstract**

A mobile data communications system comprises a mobile device having a reconfigurable identification module to store a set of one or more mobile identity profiles, the mobile device being configured to provide mobile data communication using a currently active mobile identity profile selected from the set of one or more mobile identity profiles; and control circuitry external to the mobile device to communicate mobile identity profile management information with the reconfigurable identification module; in which the control circuitry and the reconfigurable identification module are configured to establish a secure communication channel for the communication of at least some of the mobile identity profile management information.

## Description

### BACKGROUND

This disclosure relates to systems, modules, circuitries and methods.

Many mobile communications devices make use of so-called SIMs. A SIM (subscriber identification module) is typically a secure data storage device embodied as a small form factor flat card which is physically insertable into a mobile communications device.

It has been proposed to include the functionality of a SIM (or, more generally, of a "UICC" or universal integrated circuit card) into a wide variety of devices by embedding the UICC (as an embedded UICC or "eUICC", also referred to sometimes as an eSIM) in such a way that the UICC is not generally accessible or replaceable by the user.

### SUMMARY

In an example arrangement there is provided a mobile data communications system comprising:
a mobile device having a reconfigurable identification module to store a set of one or more mobile identity profiles, the mobile device being configured to provide mobile data communication using a currently active mobile identity profile selected from the set of one or more mobile identity profiles; and
control circuitry external to the mobile device to communicate mobile identity profile management information with the reconfigurable identification module;
in which the control circuitry and the reconfigurable identification module are configured to establish a secure communication channel for the communication of at least some of the mobile identity profile management information.

In another example arrangement there is provided a reconfigurable identification module to store a set of one or more mobile identity profiles, the reconfigurable identification module being associated with a mobile device configured to provide mobile data communication using a currently active mobile identity profile selected from the set of one or more mobile identity profiles;
in which the reconfigurable identification module is configured to establish a secure communication channel with control circuitry external to the mobile device for the communication of mobile identity profile management information.

In another example arrangement there is provided circuitry comprising:
communications circuitry to establish a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using a currently active mobile identity profile selected from the set of one or more mobile identity profiles; and
control circuitry to communicate mobile identity profile management information with the reconfigurable identification module using the secure communication channel.

In another example arrangement there is provided a method comprising:
a reconfigurable identification module of a mobile device storing a set of one or more mobile identity profiles;
the mobile device providing mobile data communication using a currently active mobile identity profile selected from the set of one or more mobile identity profiles;
establishing a secure communication channel between control circuitry external to the mobile device and the reconfigurable identification module; and
communicating, using the control circuitry, mobile identity profile management information with the reconfigurable identification module using the secure communication channel.

In another example arrangement there is provided a method comprising:
a reconfigurable identification module of a mobile device storing a set of one or more mobile identity profiles each configured to allow the provision of mobile data communication by a mobile device with which the reconfigurable identification module is associated using a currently active mobile identity profile selected from the set of one or more mobile identity profiles;
establishing a secure communication channel with control circuitry external to the mobile device with which the reconfigurable identification module is associated; and
communicating mobile identity profile management information with the control circuitry using the secure communication channel.

In another example arrangement there is provided a method comprising:
establishing a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using a currently active mobile identity profile selected from the set of one or more mobile identity profiles; and
communicating mobile identity profile management information with the reconfigurable identification module using the secure communication channel.

In another example arrangement there is provided computer software which, when executed by a computer, causes the computer to perform the steps of any of such methods.

Further respective aspects and features of the present technology are defined by the appended claims.

### BRIEF DESCRIPTION OF THE DRAWINGS

The present technique will be described further, by way of example only, with reference to embodiments thereof as illustrated in the accompanying drawings, in which:
Figure 1 schematically illustrates a mobile data communications network;
Figure 2 schematically illustrates a mobile device;
Figure 3 schematically illustrates an example eUICC;
Figure 4 schematically illustrates control communication within an example mobile data communications network; and
Figures 5a, 5b, 6a-6d and 7-11 are schematic flowcharts illustrating respective methods.

### DESCRIPTION OF EMBODIMENTS

### Example mobile network

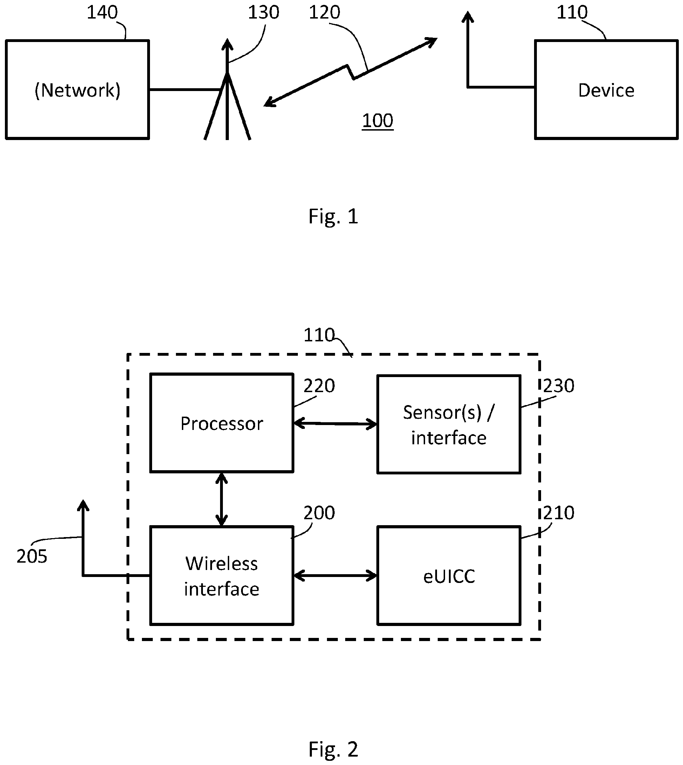

Referring to Figure 1, an example of a mobile data communications network 100 comprises a mobile device 110 which communicates wirelessly 120 with, for example, a base station 130 associated with a network 140. The device 110 may be, for example, any type of user equipment (UE) such as a portable mobile telephony device but in the present examples the techniques to be described have particular relevance to mobile devices 110 without necessarily having a built-in user interface. Examples include so-called loT (Internet of things) devices such as mobile-connected cameras, sensors, transducers, detectors or the like.

The mobile device 110 includes a UICC (universal integrated circuit card) which may be an embedded UICC, for example implemented as hard-wired circuitry and/or embedded software, or may be a physically removable SIM card, while still providing the functionality discussed below. The term "eUICC" or "reconfigurable identification module" will be used in the following description to encompass these various possibilities, but in either case, a common feature relevant to the discussion which follows is that a mobile identity profile stored by the eUICC may be controlled and/or modified from outside of the mobile device.

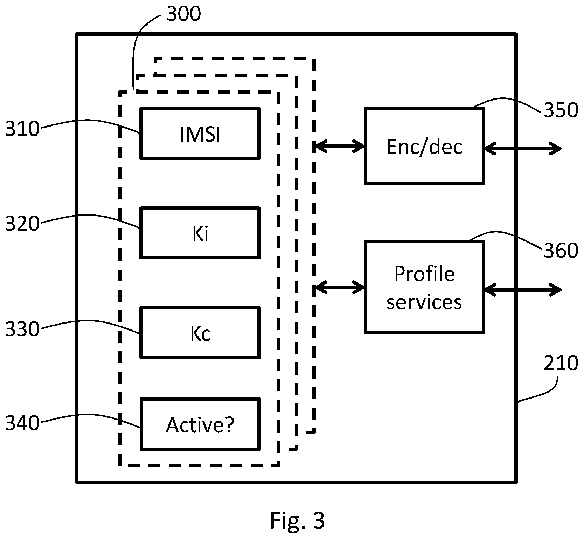

Mobile identity profiles will be discussed further with reference to Figure 3 below, but in general terms, the eUICC carries certain data which uniquely identifies that eUICC and governs interactions between a mobile device in which the eUICC is installed and a mobile network. Some of this data may be transmitted across the mobile network to identify the mobile device and some is kept secret by the eUICC and within a secure database held by the mobile network operator (MNO) for use in generating encryption keys for secure data transmission across the mobile network. A reason for wishing to control and/or modify a mobile identity profile is to allow a change of mobile network, for example switching to a mobile network provided by a different MNO.

In general terms, a mobile device equipped with the eUICC is configured to provide mobile data communication via a respective mobile network operator using each of the mobile identity profiles. It is not a requirement that each mobile identify profile corresponds to a different MNO (more than one profile may work with the same MNO, for example by different tariffs or the like, but there is a general capability that a profile is associated with an MNO).

This type of arrangement has many different applications. An example relates to the use of one or more eUICCs in an automobile, where it may be a requirement that in the case of a road accident or other emergency, the automobile's system is automatically place an emergency call to summon assistance. To provide an increased level of reliability despite such an accident, and to alleviate concerns of hacking into the automobile's systems, an embedded UICC may be used. Indeed, some automobiles have multiple eUICCs for system and user communications. Variations to the mobile identity profile held by such eUICCs allow the automobile manufacturer and/or the user to change mobile networks or tariffs according to their current needs.

Other example arrangements include, for example, remotely installable camera devices or sensors. Once again, commercial requirements may require a change of MNO or tariff but if a device is already installed in a remote location (for example at the top of a CCTV mast) it is much easier to perform a remote operation to control and/or modify the mobile identity profile than to physically retrieve the device and then reinstall it.

### Example device and eUICC

Figure 2 is a schematic diagram illustrating an example mobile device 110 in more detail. The device comprises a wireless interface 200 which operates to provide wireless communication with the base station 130 in association with an antenna 205, an eUICC or reconfigurable identification module 210, a processor 220 and one or more sensors/interface devices 230 such as a camera, a strain gauge, a transducer, a light, a loudspeaker or the like providing the interface functionality of the device 110.

In operation, the processor 220 interacts with the sensors/interface devices 230 to provide interface functionality, such as receiving inputs from the sensors/interface devices 230 for transmission to other apparatus such as a server (not shown) via the mobile network and/or generating outputs to the sensors/interface devices 230 in response to data or instructions received from other apparatus such as a server. Communication of such data is handled by the processor 220 interacting with the wireless interface 200.

As part of its operations to communicate with the mobile network, the wireless interface 200 interacts with the eUICC. An example showing the eUICC 210 in more detail is provided in Figure 3. Here, the eUICC 210 comprises secure storage 300 storing one or more mobile identity profiles (each represented by a broken line rectangle) each comprising, for example, a unique identifier called an IMSI (International mobile subscriber identity) 310, secret keys Ki 320 and Kc 330 and an "active" flag 340. The triplet (IMSI, Kc, Ki) defines the device's interaction with the mobile network but is just one example of a set of data achieving that functionality. In general, however, a mobile identity profile will include at least some information securely held by the eUICC.

The "active" flag 340 indicates which of the mobile identity profiles 300 is currently active and available for use by the eUICC. In some examples, the circuitry, software or firmware of the eUICC can constrain this arrangement so that only one mobile identity profile 300 is allowed to be active at any one time, but in other possible examples, more than one mobile identity profile 300 could be allowed to be active, for example to provide a device having the capability of accessing multiple networks, for example for diversity or fault-tolerant operation or to allow different types of data such as user data and business data to pass by different network channels.

In an example arrangement, the mobile network may retain details of each mobile identity profile issued or authorised by the MNO. In examples, the IMSI forms a primary key to each such record. When the mobile device is first enabled, the mobile device sends its IMSI to the mobile network which replies with authentication data derived using a secure key (such as Ki 320) known only to the network and the eUICC. Ki is never transmitted between the network and the eUICC during routine mobile data communications but instead is combined with the IMSI to produce a challenge and response for identification purposes. The other encryption key Kc 330 is used for encrypting data transfers during over-the-air communication between the mobile device and the network.

To provide at least a part of these encryption and decryption operations, the eUICC may comprise encryption/decryption provision 350, for example secure circuitry and/or software or firmware. Also, so-called profile services 360, again implementable by secure circuitry and/or software or firmware, allow for the updating of the mobile identity profile information using techniques to be described below. Both the encryption/decryption provision 350 and the profile services 360 provide interfaces to the wireless interface 200.

### Control communication example

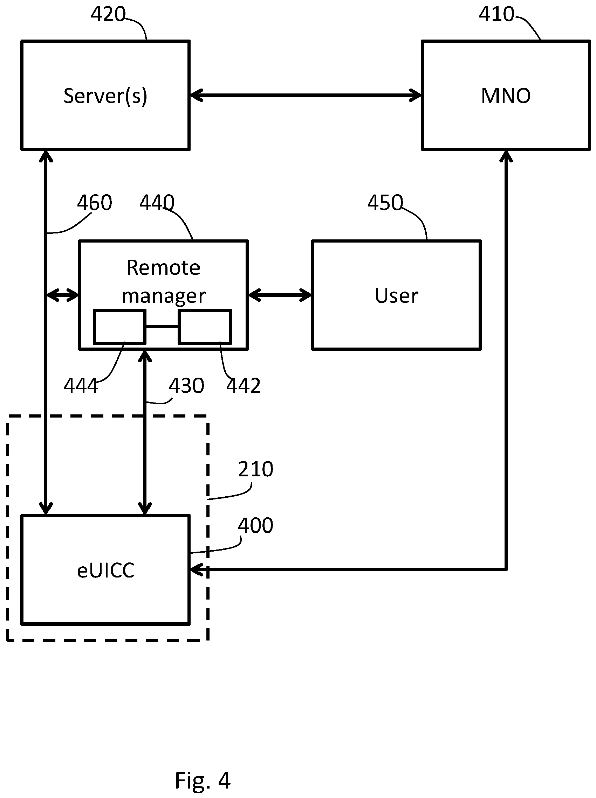

Figure 4 schematically illustrates control communication within an example mobile data communications network.

In the example of Figure 4, the mobile device 210 is shown in simplified form but still including an eUICC 400. The mobile network itself is operated by a mobile network operator (MNO) 410 which communicates with one or more servers 420, which in turn may communicate with the remote manager 440. In the context of the present type of arrangement, these servers communicated with by the MNO may include a so-called SM-DP+ (subscription manager data preparation server) having functionality which may include preparing, storing and protecting mobile identity profiles and/or a so-called SM-DS (subscription manager discovery server) having functionality which may include ensuring that communication by the SM-DP+ server will reach a given eUICC.

The eUICC itself interacts by a secure data channel 430 with a remote manager ("RM") (otherwise known as a "Remote loT Manager") or control circuitry 440 which itself interfaces with a user 450 (which in the context of the type of devices such as loT devices being discussed here may be a professional user such as an automotive manufacturer, a CCTV operator or the like).

The secure data channel 430 may be implemented by or carried by a so-called GSMA ES10 interface such as a so-called ES10c interface used for profile management. This, along with other aspects of the interaction of an eUICC for profile updates, is described in the GSMA document "RSP Technical Specification Version 2.2" (01 September 2017) the contents of which are hereby incorporated into the present description by reference.

The RM 440 comprises communication circuitry 442 which can operate to establish communications including the secure data channel 430 with the eUICC 400. Note that at a transport level, the communications may be carried by the prevailing mobile data connection with the eUICC, which is to say by the prevailing mobile network defined by a currently active mobile identity profile. In other words, in the case of a command to disable one mobile identity profile and enable another, the command may be carried by the initial mobile network connection and the acknowledgement by the replacement mobile network connection. However, if the mobile device is equipped with other network interfaces such as a WiFi^{®} or other internet connection, these could be used to carry the command and/or the acknowledgement. Secure transport is overlaid on the basic mobile data connection to provide the secure channel 430. The remote manager 440 also comprises control circuitry 444 to handle an interface with the user 450 and the preparation and handling of commands to be sent to the eUICC 400.

In the examples under discussion, a new mobile identity profile for populating the eUICC is provided by the server(s) 420 using a secure data channel 460. The channel 460 may be a so-called ES8+ channel with profile downloads tunnelled by so-called ES9+ techniques. Such techniques are defined by the GSMA (Global System for Mobile Communications Association). Note that in some examples, and as illustrated in Figure 4, communication between the server(s) 420 and the eUICC, for example to provide a new profile, may be via the Remote Manager 440 rather than directly between the server(s) and the eUICC. In this case, the Remote Manager would simply forward the new profile information.

Other control information relating to the stored mobile identity profiles is communicated by the remote manager 440 directly with the eUICC 400 by the secure channel 430. In other words, even if such control information originates with one or more of the servers SM-DP+ and SM-DS, the RM 440 sits between the server(s) and the eUICC (or in other words, is connected for data communication between them, or in other words communication is via the RM 440) and establishes the secure channel with the eUICC using the techniques discussed here.

Therefore Figure 4 provides an example of a mobile data communications system comprising: a mobile device 210 having a reconfigurable identification module 400 to store a set of one or more mobile identity profiles, the mobile device being configured to provide mobile data communication using a currently active mobile identity profile selected from the set of one or more mobile identity profiles; control circuitry 440 external to the mobile device to communicate mobile identity profile management information with the reconfigurable identification module; in which the control circuitry 440 and the reconfigurable identification module 400 are configured to establish a secure communication channel 430 for the communication of at least some of the mobile identity profile management information.

In Figure 4, the eUICC 400 provides an example of a reconfigurable identification module to store a set of one or more mobile identity profiles, the reconfigurable identification module being associated with a mobile device configured to provide mobile data communication using a currently active mobile identity profile selected from the set of one or more mobile identity profiles; in which the reconfigurable identification module is configured to establish a secure communication channel 430 with control circuitry 440 external to the mobile device for the communication of mobile identity profile management information.

Similarly, in Figure 4, the RM 440 provides an example of circuitry comprising: communications circuitry 442 to establish a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using for example a currently active mobile identity profile selected from the set of one or more mobile identity profiles; and control circuitry 444 to communicate mobile identity profile management information with the reconfigurable identification module using the secure communication channel.

As mentioned above, where a device provides another communication channel such as WiFi or another internet connection, that may optionally be used to transport such communications.

Note that a single remote manager may, from time to time, interact with multiple different examples of eUICCs. Similarly, an eUICC may be associated with different remote managers at different times during its usage lifecycle.

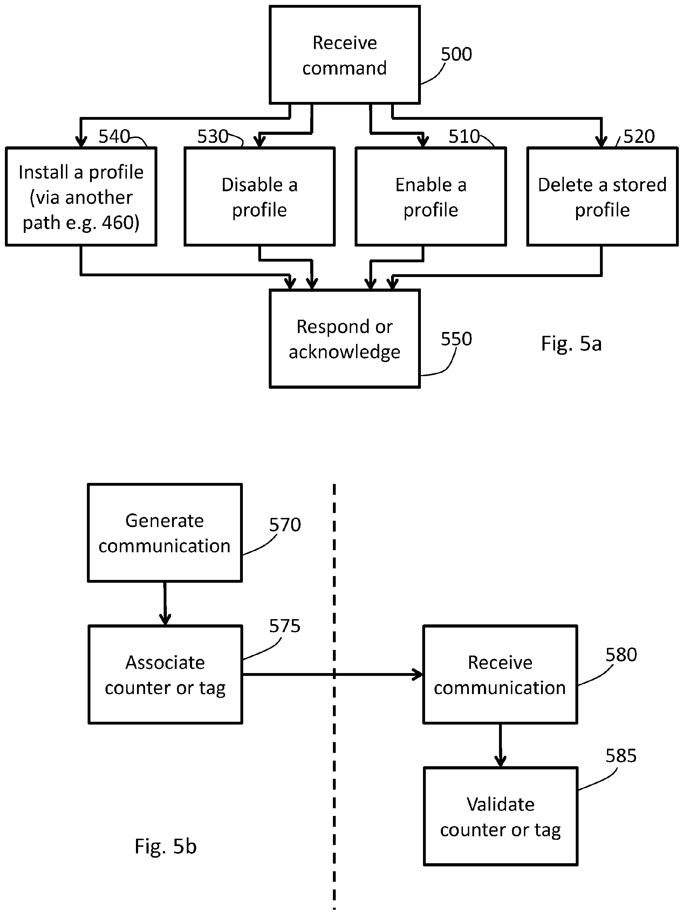

Figure 5a is a schematic flowchart illustrating an example of control operations as between the remote manager 440 and the eUICC 400 via the secure channel 430. The operations of Figure 5a relate to such operations as handled by the eUICC 400. The profile services 360 of Figure 3 operates to implement such control operations at the eUICC.

At a step 500, the eUICC 400 receives a command from the remote manager 440 and parses this command to represent one or more of the following example options:
(i) a command 510 to enable or set a given mobile identity profile of the set of one or more mobile identity profiles as a currently active mobile identity profile, for example by setting the "active" flag 340 of that mobile identity profile to indicate an active state;
(ii) a command 520 to delete a given mobile identity profile of the set of one or more mobile identity profiles; or
(iii) a command 530 to disable use of a given mobile identity profile of the set of one or more mobile identity profiles.

A further option represents a command 540 to receive and/or install a mobile identity profile received (or to be received) either via the RM or by another path such as directly from the server(s) 420 by the path 460. In the case that the RM is involved in the receipt of the profile, the actual profile might be sent through the remote manager, but the communication would not use the secure channel 430 - the secure channel in this situation (of the eUICC receiving a new profile) would be between the eUICC and the SM-DP+. The remote manager could simply pass the information on without modification. As discussed, in the present examples, the transfer of some or all profile management information (being information / commands / responses associated with managing the use of profiles rather than delivering the profiles themselves) can be via the RM, with at least some of it being via the secure channel 430 and at least some of it being authenticated using techniques described here.

In response to receipt and/or execution of a command, the profile services 360 can provide a response or acknowledgement 550 by the reconfigurable identification module of completion of an operation defined by a command received from the control circuitry. Such a response or acknowledgement could include a confirmation, rejection or error. A rejection could happen if for example the operation is forbidden by the relevant profile, for example through a rule defined by the MNO. An error could be returned if the command is not recognised or an error happened during the execution of the command. In some examples, in the case of error or rejection the response is not signed so as to avoid using a key or secret information in connection with a communication which may be by an attacker. (That is to say, a malicious communication or attack attempt is more likely to be suspected in the case that a command is received but is simply not recognised or is not allowed).

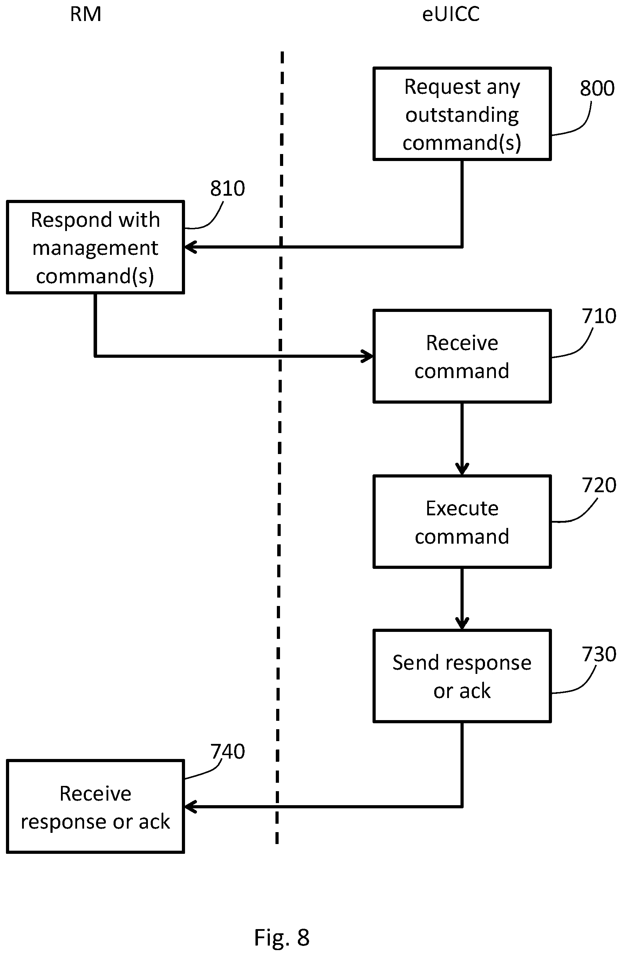

A further example type of communication will be discussed with reference to Figure 8.

As a further optional protection measure against malicious interference or attacking of the secure communications described here, Figure 5b schematically illustrates the use of a counter, tag or similar measure to avoid communications (whether they are commands or responses/acknowledgements) being re-used or replayed by a malicious party in order to pretend to be valid and current communications. In these examples, each such communication (or in other examples, each command or each response/acknowledgement) is associated with a data item such as a counter which is arranged to change from one valid communication to a next valid communication.

In Figure 5b, operations by one communicating party, the party sending a communication (whether that communication is a command or a response/acknowledgement) are illustrated to the left of a vertical broken line, and operations by the other party, the party receiving that communication) are illustrated to the right side.

At a step 570, the sending party generates a communication to be sent and at a step 575 associates a counter or tag, as an example of a data item as discussed above, with the communication, for example by embedding the counter or tag within a field of the communication. The entire communication may be authenticated and/or signed as discussed above. At a step 580, the receiving party receives the communication and, at a step 585, validates or verifies the received or associated counter or tag, for example before acting upon (or as a condition for completing the action upon) the contents of the communication.

While it would be possible to use as the data item a simple incrementing or decrementing counter or a cyclic counter, in other examples a cryptographic hash function may be used which progresses from one value to a next (generally non-adjacent) value in a predictable and repeatable manner under the control of a secret key so as to potentially make it more difficult for a malicious party to reproduce or spoof a valid counter or tag value. In any of these examples, the progression from one data item value to a next expected data item value is carried out in a corresponding manner at the sending entity and the receiving entity. In some examples, for example those using a hash type function, the receiving entity may allow a received communication to have either the next expected data item value or any of the next n expected data item values (where n is an integer greater than 1, such as 10), to allow for resynchronisation of the expected fata items in the event that transmission errors of a communication cause the loss of a communication. In other examples, the data item to be associated with a communication to be sent to a party may be generated as a response to the data item received in respect of the last or most recent incoming communication from that party.

This provides an example in which for the communication of at least some of the mobile identity profile management information, one of the control circuitry and the reconfigurable identification module sending a communication is configured to associate a data item with the communication which changes between successive communications, and the other of the control circuitry and the reconfigurable identification module receiving the communication is configured to verify that the data item associated with a received communication is associated with an expected data item.

### Establishing a secure channel

The techniques to be described below involve generating or establishing the secure channel 430, which in these embodiments represents a secure channel directly between the remote manager 440 and the eUICC 400. By avoiding the need for a secure channel between the remote manager 440 and intermediate circuitry or logic at the mobile device (which then communicate securely with the eUICC) the need for trusted certification of the mobile device itself may be avoided. Noting that at least some examples may relate to low-cost loT type devices, this arrangement can avoid the expense of obtaining certification of the devices themselves. By its nature, an eUICC is always a trusted component.

In examples to be described below, the control circuitry and the reconfigurable identification module are configured to establish a mutually authenticated communication channel. For example the control circuitry and the reconfigurable identification module may be configured to establish commonly held secret information for use in authenticating mobile identity profile management information communicated between the control circuitry and the reconfigurable identification module.

In other examples to be described below, the control circuitry and the reconfigurable identification module may be configured to share and trust respective public keys and to authenticate communication from the other of the control circuitry and the reconfigurable identification module using a respective private key.

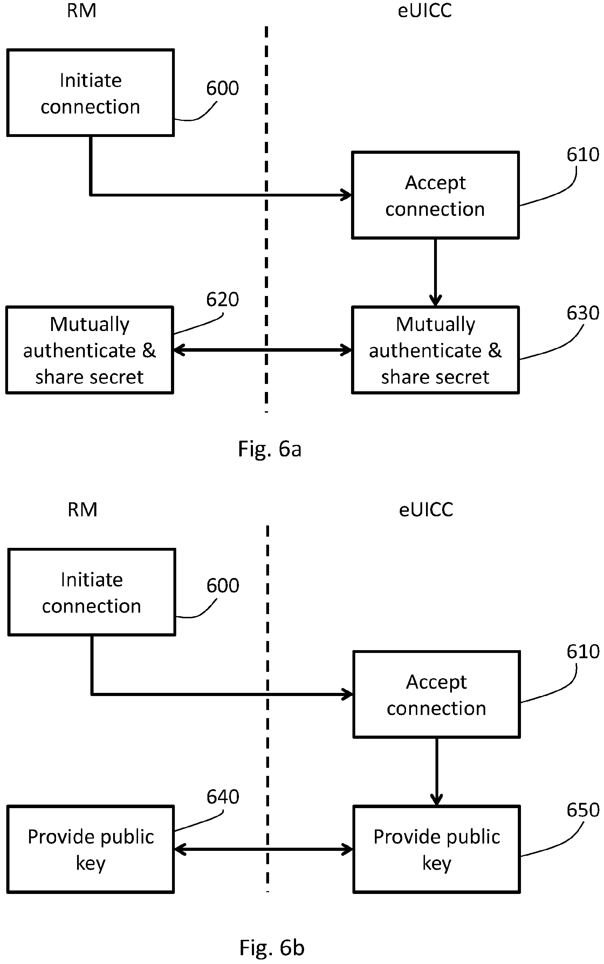

Figures 6a and 6b are schematic flowcharts representing methods which may be performed by the remote manager (RM) and the eUICC to establish a secure channel such as the channel 430. Example operations in each case by the RM are shown to the left of a broken vertical line and example operations by the eUICC are shown to the right.

In Figure 6a, the remote manager initiates a connection at a step 600 and the eUICC accepts the connection at a step 610. Such a connection may be established using, for example, so-called Datagram Transport Level Security (DTLS) techniques or any application level protocol such as an LWM2M (lightweight machine-to-machine) protocol. During this process the eUICC is identified and the RM associates the device (with which the eUICC is associated or in which the eUICC is installed) with that eUICC.

Once the connection is in place, the remote manager and the eUICC mutually authenticate at steps 620, 630 and share secret information for use in authenticating subsequent interactions. In some examples, the eUICC generates a signature or token or mutual authentication code associated with the RM and sends it to the RM.

In order for the RM then to send a request or command to the eUICC, the request or command is signed or authenticated using the shared secret information. Any intervening circuitry or logic at the mobile device cannot access or adapt or modify the request because the key(s) used to authenticate the exchange or communication is (are) known only between the eUICC and RM. Therefore such intervening circuitry or logic at the mobile device simply forwards the request or command to the eUICC. Upon receipt, the eUICC verifies the integrity and/or authenticity using the shared key(s) and executes the command as described above.

In an example the RM sends a signed APDU (application protocol data unit) command to the eUICC.

In previously proposed arrangements, APDU commands are sent from the device to the eUICC. In the present examples it is proposes to send them from the RM, in which case the device will only forward them. In the present examples, the APDU commands are signed, so that the eUICC will then be able to verify their integrity and authenticity. A compromised device will not itself be able to create valid (that is to say, acceptable to the eUICC as regards their integrity and authenticity) APDU commands.

Therefore, in the present examples, APDU commands are themselves signed. This is an example of the establishment of a secure communication channel for the communication of mobile identity profile management information (directly) between the control circuitry and the reconfigurable identification module.

In another optional arrangement, the request or command is not authenticated but the response or acknowledgement is authenticated using these techniques. In this way, the eUICC can confirm that the correct action has been performed by signing or authenticating the acknowledgement.

In another optional arrangement, the request or command is authenticated but the response or acknowledgement is not authenticated using these techniques. In this way, the eUICC can verify that a correct command has been received by the associated authentication.

Therefore, in some examples the reconfigurable identification module and the control circuitry are configured to authenticate a response or acknowledgement by the reconfigurable identification module of completion of an operation defined by a command received from the control circuitry. In some examples, the reconfigurable identification module and the control circuitry are configured to authenticate a command provided to the reconfigurable identification module by the control circuitry. In some examples, both authentications may be used.

Another technique for preparing the secure channel, which applies to each of the possible arrangements discussed above, is shown schematically in Figure 6b. Here, the steps 600, 610 may be provided as described above, but at steps 640, 650 the RM and eUICC each provided to the other party a public key of a public-private key pair to allow for authentication of subsequent messages between them. Note that in the optional arrangement in which only uni-directional authentication is used, it may be the case that only one of the steps 640, 650 (being relevant to the authentication which is to be provided) is required.

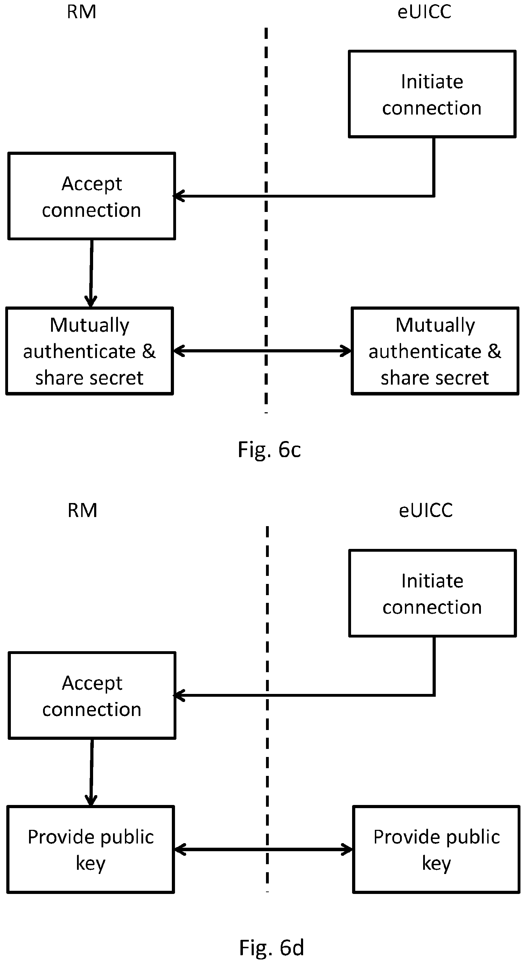

Figures 6c and 6d correspond generally to Figures 6a and 6b respectively, except that in these examples, it is the eUICC which initiates the establishment of a connection with the RM.

### Push and Pull Commands

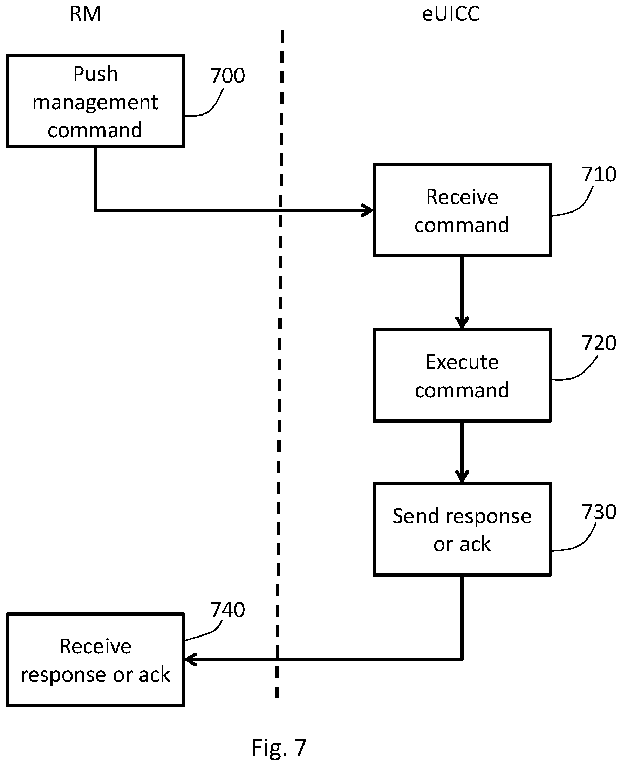

Figures 7 and 8 refer respectively to so-called push and pull commands. In each case, schematic operations by the RM or control circuitry are shown to the left of a broken line and operations by the eUICC are shown to the right of that line.

Figure 7 relates to a so-called push command in which, at a step 700, the RM sends or pushes a management command to the eUICC which receives it at a step 710, executes it where appropriate at a step 720 and acknowledges it or responds at a step 730. At a step 740 the RM receives the acknowledgement or response.

Figure 8 has the operations 710 720, 730 and 740 in common with Figure 7, but the initiation of the command is slightly different. In particular, a "pull" arrangement is used by which, at a step 800, the eUICC requests any outstanding command(s) from the RM which, at a step 810 response with one or more command(s), for example, one command at a time if more than one is outstanding. This provides an example of a further type of communication by the channel 430, namely a request by the reconfigurable identification module to the control circuitry for any commands which are awaiting implementation by the reconfigurable identification module.

### Software/firmware examples

Operations of one or both of the remote manager 440 and the eUICC 400 may be executed, at least in part, by data processing hardware operating under the control of program code such as appropriate software and/or firmware. In such examples, that program code (which causes a computer or other data processing hardware to perform the functions described here) and a non-transitory machine-readable storage medium such as a read-only memory, a Flash memory, a magnetic or optical disk or the like which stores such program code are each considered as respective embodiments of the present disclosure.

### Method Examples

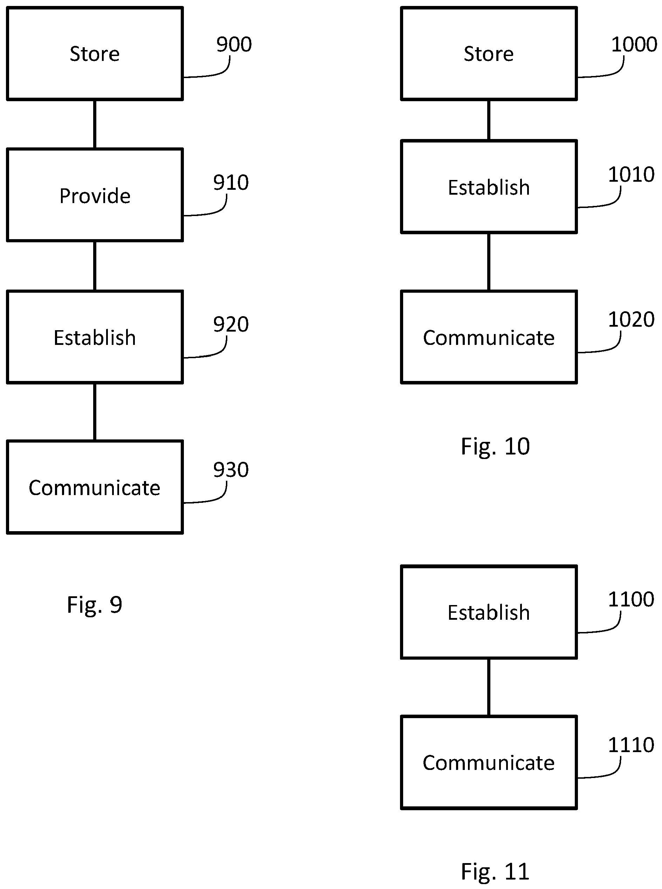

Figure 9 is a schematic flowchart representing a method, for example relating to operations of a system, comprising:
a reconfigurable identification module of a mobile device storing (at a step 900) a set of one or more mobile identity profiles;
the mobile device providing (at a step 910) mobile data communication using a currently active mobile identity profile selected from the set of one or more mobile identity profiles;
establishing (at a step 920) a secure communication channel between control circuitry external to the mobile device and the reconfigurable identification module; and
communicating (at a step 930), using the control circuitry, mobile identity profile management information with the reconfigurable identification module using the secure communication channel.

Figure 10 is a schematic flowchart representing a method, for example relating to operations of an identification module, comprising:
a reconfigurable identification module of a mobile device storing (at a step 1000) a set of one or more mobile identity profiles each configured to allow the provision of mobile data communication by a mobile device with which the reconfigurable identification module is associated using a currently active mobile identity profile selected from the set of one or more mobile identity profiles;
establishing (at a step 1010) a secure communication channel with control circuitry external to the mobile device with which the reconfigurable identification module is associated; and
communicating (at a step 1020) mobile identity profile management information with the control circuitry using the secure communication channel.

Figure 11 is a schematic flowchart representing a method, for example relating to operations of control circuitry, comprising:
establishing (at a step 1100) a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using a currently active mobile identity profile selected from the set of one or more mobile identity profiles; and
communicating (at a step 1110) mobile identity profile management information with the reconfigurable identification module using the secure communication channel.

### General matters

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope and spirit of the invention as defined by the appended claims.

Respective aspects and features of the present disclosure are defined by the following numbered clauses:
1. A mobile data communications system comprising:
   a mobile device having a reconfigurable identification module to store a set of one or more mobile identity profiles, the mobile device being configured to provide mobile data communication using a currently active mobile identity profile selected from the set of one or more mobile identity profiles; and
   control circuitry external to the mobile device to communicate mobile identity profile management information with the reconfigurable identification module;
   in which the control circuitry and the reconfigurable identification module are configured to establish a secure communication channel for the communication of at least some of the mobile identity profile management information.
2. The system of clause 1, in which the mobile identity profile management information comprises one or more selected from the list consisting of:
   (i) a command to set a given mobile identity profile of the set of one or more mobile identity profiles as a currently active mobile identity profile;
   (ii) a command to delete a given mobile identity profile of the set of one or more mobile identity profiles;
   (iii) a command to disable use of a given mobile identity profile of the set of one or more mobile identity profiles;
   (iv) a command to receive and/or install a new mobile identity profile;
   (v) a request by the reconfigurable identification module to the control circuitry for any commands which are awaiting implementation by the reconfigurable identification module; and
   (vi) a response or acknowledgement by the reconfigurable identification module of completion of an operation defined by a command received from the control circuitry.
3. The system of clause 1 or clause 2, in which the control circuitry and the reconfigurable identification module are configured to establish a mutually authenticated communication channel.
4. The system of clause 3, in which the control circuitry and the reconfigurable identification module are configured to establish commonly held secret information for use in authenticating mobile identity profile management information communicated between the control circuitry and the reconfigurable identification module.
5. The system of clause 4, in which the reconfigurable identification module and the control circuitry are configured to authenticate a response or acknowledgement by the reconfigurable identification module of completion of an operation defined by a command received from the control circuitry.
6. The system of clause 4 or clause 5, in which the reconfigurable identification module and the control circuitry are configured to authenticate a command provided to the reconfigurable identification module by the control circuitry.
7. The system of clause 1 or clause 2, in which the control circuitry and the reconfigurable identification module are configured to share and trust respective public keys and to authenticate communication from the other of the control circuitry and the reconfigurable identification module using respective private keys.
8. The system of any one of the preceding clauses, in which for the communication of at least some of the mobile identity profile management information, one of the control circuitry and the reconfigurable identification module sending a communication is configured to associate a data item with the communication which changes between successive communications, and the other of the control circuitry and the reconfigurable identification module receiving the communication is configured to verify that the data item associated with a received communication is associated with an expected data item.
9. The system of any one of the preceding clauses, in which the reconfigurable identification module is removable from the mobile device.
10. The system of any one of the preceding clauses, in which the control circuitry is configured to communicate with one or more of: a Subscription Manager Data Preparation, SM-DP+, server and a Service Manager Discovery Server SM-DS.
11. The system of any one of the preceding clauses, in which the control circuitry is configured to communicate with the reconfigurable identification module by a Global System for Mobile Communications Association, GSMA, ES10 interface.
12. The system of clause 11, in which the ES10 interface is an ES10c interface.
13. The system of any one of the preceding clauses, in which the mobile device is configured to provide mobile data communication via a respective mobile network operator using each of the mobile identity profiles.
14. A reconfigurable identification module to store a set of one or more mobile identity profiles, the reconfigurable identification module being associated with a mobile device configured to provide mobile data communication using a currently active mobile identity profile selected from the set of one or more mobile identity profiles;
   in which the reconfigurable identification module is configured to establish a secure communication channel with control circuitry external to the mobile device for the communication of mobile identity profile management information.
15. The reconfigurable identification module of clause 14, in which the reconfigurable identification module is an embedded universal integrated circuit card, eUICC and the control circuitry is a Remote Internet of Things, loT, Manager.
16. Circuitry comprising:
   communications circuitry to establish a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using a currently active mobile identity profile selected from the set of one or more mobile identity profiles; and
   control circuitry to communicate mobile identity profile management information with the reconfigurable identification module using the secure communication channel.
17. A method comprising:
   a reconfigurable identification module of a mobile device storing a set of one or more mobile identity profiles;
   the mobile device providing mobile data communication using a currently active mobile identity profile selected from the set of one or more mobile identity profiles;
   establishing a secure communication channel between control circuitry external to the mobile device and the reconfigurable identification module; and
   communicating, using the control circuitry, mobile identity profile management information with the reconfigurable identification module using the secure communication channel.
18. A method comprising:
   a reconfigurable identification module of a mobile device storing a set of one or more mobile identity profiles each configured to allow the provision of mobile data communication by a mobile
   device with which the reconfigurable identification module is associated using a currently active mobile identity profile selected from the set of one or more mobile identity profiles;
   establishing a secure communication channel with control circuitry external to the mobile device with which the reconfigurable identification module is associated; and
   communicating mobile identity profile management information with the control circuitry using the secure communication channel.
19. A method comprising:
   establishing a secure communication channel with a reconfigurable identification module associated with a mobile device, the reconfigurable identification module being configured to store a set of one or more mobile identity profiles each configured to allow the provision of mobile data communication by the mobile device with which the reconfigurable identification module is associated using a currently active mobile identity profile selected from the set of one or more mobile identity profiles; and
   communicating mobile identity profile management information with the reconfigurable identification module using the secure communication channel.
20. Computer software which, when executed by a computer, causes the computer to perform the steps of clause 18 or clause 19.

## Claims

1. A mobile data communications system comprising:
a mobile device having a reconfigurable identification module to store a set of one or more mobile identity profiles, the mobile device being configured to provide mobile data communication using a currently active mobile identity profile selected from the set of one or more mobile identity profiles; and
control circuitry external to the mobile device to communicate mobile identity profile management information with the reconfigurable identification module;
in which the control circuitry and the reconfigurable identification module are configured to establish a secure communication channel for the communication of at least some of the mobile identity profile management information.

2. The system of claim 1, in which the mobile identity profile management information comprises one or more selected from the list consisting of:
(i) a command to set a given mobile identity profile of the set of one or more mobile identity profiles as a currently active mobile identity profile;
(ii) a command to delete a given mobile identity profile of the set of one or more mobile identity profiles;
(iii) a command to disable use of a given mobile identity profile of the set of one or more mobile identity profiles;
(iv) a command to receive and/or install a new mobile identity profile;
(v) a request by the reconfigurable identification module to the control circuitry for any commands which are awaiting implementation by the reconfigurable identification module; and
(vi) a response or acknowledgement by the reconfigurable identification module of completion of an operation defined by a command received from the control circuitry.

3. The system of claim 1 or claim 2, in which the control circuitry and the reconfigurable identification module are configured to establish a mutually authenticated communication channel.

4. The system of claim 3, in which the control circuitry and the reconfigurable identification module are configured to establish commonly held secret information for use in authenticating mobile identity profile management information communicated between the control circuitry and the reconfigurable identification module.

5. The system of claim 4, in which the reconfigurable identification module and the control circuitry are configured to authenticate a response or acknowledgement by the reconfigurable identification module of completion of an operation defined by a command received from the control circuitry.

6. The system of claim 4 or claim 5, in which the reconfigurable identification module and the control circuitry are configured to authenticate a command provided to the reconfigurable identification module by the control circuitry.

7. The system of claim 1 or claim 2, in which the control circuitry and the reconfigurable identification module are configured to share and trust respective public keys and to authenticate communication from the other of the control circuitry and the reconfigurable identification module using respective private keys.

8. The system of any one of the preceding claims, in which for the communication of at least some of the mobile identity profile management information, one of the control circuitry and the reconfigurable identification module sending a communication is configured to associate a data item with the communication which changes between successive communications, and the other of the control circuitry and the reconfigurable identification module receiving the communication is configured to verify that the data item associated with a received communication is associated with an expected data item.

9. The system of any one of the preceding claims, in which the reconfigurable identification module is removable from the mobile device.

10. The system of any one of the preceding claims, in which the control circuitry is configured to communicate with one or more of: a Subscription Manager Data Preparation, SM-DP+, server and a Service Manager Discovery Server SM-DS.

11. The system of any one of the preceding claims, in which the control circuitry is configured to communicate with the reconfigurable identification module by a Global System for Mobile Communications Association, GSMA, ES10 interface.

12. The system of any one of the preceding claims, in which the mobile device is configured to provide mobile data communication via a respective mobile network operator using each of the mobile identity profiles.

13. A reconfigurable identification module to store a set of one or more mobile identity profiles, the reconfigurable identification module being associated with a mobile device configured to provide mobile data communication using a currently active mobile identity profile selected from the set of one or more mobile identity profiles;
in which the reconfigurable identification module is configured to establish a secure communication channel with control circuitry external to the mobile device for the communication of mobile identity profile management information.

14. A method comprising:
a reconfigurable identification module of a mobile device storing a set of one or more mobile identity profiles each configured to allow the provision of mobile data communication by a mobile device with which the reconfigurable identification module is associated using a currently active mobile identity profile selected from the set of one or more mobile identity profiles;
establishing a secure communication channel with control circuitry external to the mobile device with which the reconfigurable identification module is associated; and
communicating mobile identity profile management information with the control circuitry using the secure communication channel.

15. Computer software which, when executed by a computer, causes the computer to perform the steps of claim 14.
